# FASCICULE DE BREVET EUROPEEN

(11) **EP 3 907 391 B1**
(45) Date de publication et mention de la délivrance du brevet: **28.06.2023**
(21) Numéro de dépôt: 21172107.1
(22) Date de dépôt: 04.05.2021
(51) Int. Cl.: F02C 7/06, F01D 25/16, F02C 7/32

(54) **RELAIS D'ACCESSOIRES**
ZUBEHÖR-RELAIS
RELAY FOR ACCESSORIES

(30) Priorité: 07.05.2020 FR 2004575
(43) Date de publication de la demande: 10.11.2021
(73) Titulaire: Safran Transmission Systems, 92700 Colombes (FR)
(72) Inventeur: PIGOTT, Quentin Pierre Henri, 77550 MOISSY-CRAMAYEL (FR); SIMONOTTI, Arnaud, 77550 MOISSY-CRAMAYEL (FR)
(74) Mandataire: Ernest Gutmann - Yves Plasseraud S.A.S.

(56) Documents cités:
- WO-A2-2011/148078
- FR-A1- 3 020 410
- FR-A1- 3 045 759

## Description

### Domaine technique de l'invention

Le domaine de la présente invention est celui des turbomachines, notamment celui des moteurs à turbine à gaz destinés à la propulsion des aéronefs. L'invention porte sur les boîtiers d'entraînement des équipements accessoires associés à ces turbomachines, connus généralement sous la dénomination de relais d'accessoires.

### Etat de la technique antérieure

Une partie de l'énergie générée par le moteur est utilisée pour entraîner différents équipements de ce dernier. La puissance requise est prélevée mécaniquement, généralement sur l'arbre du corps haute pression du moteur à turbine à gaz, par un arbre de prise de mouvement qui est relié au fût du pignon d'entrée dans le relais d'accessoires. Le relais est monté sur le carter du moteur et il regroupe un certain nombre d'équipements ou accessoires qu'il supporte ; ce sont par exemple un générateur électrique, un alternateur, des pompes hydrauliques à carburant et à huile, un démarreur, etc.

Le relais comprend un boîtier de forme allongée à l'intérieur duquel sont montées des roues d'engrenage formant un train d'engrenages entraînant les équipements. Ces roues comportent un fût ou corps tubulaire apte, pour certains, à être relié à l'arbre d'entraînement d'un équipement. Une des roues est reliée également à l'arbre d'entrée du relais. Les différents appareils entraînés par le relais sont montés directement sur le boîtier, et les entraînements associés passent au travers de la paroi du boîtier par des ouvertures appropriées. Les roues constituant le train d'engrenages à l'intérieur du boîtier sont généralement à axes parallèles entre eux. Selon l'art antérieur connu du présent déposant, les fûts des pignons sont supportés d'un côté, par la paroi du boîtier qui est opposée à celle qui comprend l'ouverture au travers de laquelle l'équipement est entraîné, et de l'autre par la paroi comprenant l'ouverture ou bien un couvercle rapporté sur la paroi. En règle générale, le fût des pignons de la roue d'engrenage est porté d'une part par la bague extérieure d'un roulement à rouleaux ou à billes fixé sur la paroi de fond non découpée du boîtier et d'autre part par la bague externe d'un roulement à billes ou à rouleaux fixé sur le couvercle associé à l'accessoire. La denture d'engrènement de la roue d'engrenage est quant à elle située entre les deux roulements.

Un tel agencement présente un certain encombrement dans la direction des axes des engrenages. Dans le cadre de l'amélioration continue de ses produits, le présent déposant souhaite réduire l'encombrement selon ladite direction. Il est à noter que les roulements à rouleaux ont une capacité de désalignement qui impose un entraxe minimum, cet entraxe limitant la possibilité de réduire l'épaisseur des relais. A moins d'augmenter les capacités de désalignement des rouleaux et donc de diminuer leur capacité de charge, une solution différente du montage doit être trouvée. Le document FR3045759 divulgue un relais d'accessoires selon l'art antérieur.

Dans le document WO2018/178538, il a été proposé de guider les roues dentées dans deux paliers de roulements à billes agencées tous les deux à une extrémité du fût de la roue et de réaliser une étanchéité de l'autre extrémité du fut dans un alésage d'une paroi du boîtier. On notera que cette autre extrémité n'assure qu'une étanchéité et non pas un guidage de l'arbre.

On comprend que toutes les solutions techniques précédemment évoquées utilisent toutes des roulements qui constituent un centre de coûts important au sein d'un relais d'accessoires. Par ailleurs, les paliers avec leurs roulements associés sont relativement lourds. Par ailleurs, ils nécessitent pour un fonctionnement efficace un placement spécifique qui impose une chaine de côte précise qui complique le montage et la conception du relais d'accessoires. Par ailleurs, le coût du relais d'accessoire s'en trouve augmenté.

L'invention a pour but résoudre les inconvénients précités.

### Résumé de l'invention

Pour cela le présent document propose un relais d'accessoires apte à entrainer des équipements d'un moteur à turbine à gaz, tel qu'un moteur d'aéronef, comprenant un boîtier et une pluralité de roues d'engrenages agencées à l'intérieur du boîtier, chaque roue comprenant un voile annulaire portant extérieurement une denture périphérique externe, dans lequel au moins l'une des roues est guidée en rotation par au moins un palier hydrodynamique du boîtier.

Selon la présente divulgation, la roue est guidée en rotation par un palier hydrodynamique du boitier c'est-à-dire solidaire de celui-ci. Le palier peut être monté sur une première paroi du boitier ou bien sur une seconde paroi en vis-à-vis formant par exemple un couvercle obturant le boitier.

Le palier hydrodynamique comprend des moyens de blocage axial ou butés fixes assurant un maintien axial de la roue dentée.

Ladite au moins une roue peut être guidée en rotation par un seul palier hydrodynamique. Ce montage permet ainsi d'alléger le relais d'accessoires puisque les bagues interne et externe des paliers ainsi que les roulements ne sont plus nécessaires.

Le voile annulaire peut être sensiblement perpendiculaire à l'axe de rotation de ladite roue. Dit autrement, le voile annulaire est une paroi annulaire sensiblement radiale.

Le boitier peut comprendre une portion en saillie solidaire d'une première paroi du boîtier, cette portion en saillie étant entourée par une bague du palier hydrodynamique laquelle est entourée par un fût de la roue formé au niveau de l'extrémité radialement interne du voile annulaire de ladite roue. Cette portion en saillie peut être formée en saillie depuis la première paroi du boîtier de sorte que l'extrémité opposée de celle reliée à la première paroi est libre.

Ladite portion en saillie peut être une portion tubulaire qui est formée d'un seul tenant avec ladite première paroi du boîtier ou bien rapportée sur ladite première paroi du boîtier.

Le palier hydrodynamique peut comprendre des moyens d'alimentation en huile comportant un ou plusieurs conduits débouchant radialement dans un espace annulaire formé radialement entre la bague et une surface cylindrique interne du fût de ladite roue pour la formation d'un film d'huile dans ledit espace annulaire.

ladite portion tubulaire délimite intérieurement une cavité de stockage d'huile communiquant avec ledit espace annulaire. La cavité permet qu'en cas de coupure temporaire d'alimentation en huile ou de baisse de la pression d'huile dans le circuit amont, il y ait toujours une alimentation en huile du palier. En fonctionnement normal, cette cavité n'assure pas de fonction d'alimentation en huile.

Le fût peut être relié à une paroi cylindrique coaxiale à l'axe de rotation de la roue, cette paroi cylindrique traversant une seconde paroi du boîtier agencée en vis-à-vis de ladite première paroi selon l'axe de rotation de ladite roue et comportant des moyens de couplage en rotation avec un arbre d'un accessoire.

La bague du palier hydrodynamique peut être bloquée axialement par un écrou vissé sur ladite portion en saillie. L'écrou peut servir d'organe d'obturation d'une extrémité axiale de la cavité d'huile, l'autre extrémité étant par exemple fermée par le fond de la portion tubulaire.

Les moyens de blocage axial ou butés fixes peuvent ainsi comprendre un rebord annulaire de la bague et une cale annulaire qui peut être bloquée par un écrou vissé sur la portion en saillie. Ladite portion en saillie peut être fixée sur un bossage de la première paroi du boîtier.

Le présent document concerne également une turbomachine équipée d'un relais d'accessoires tel que décrit ci-dessus.

### Brève description des figures

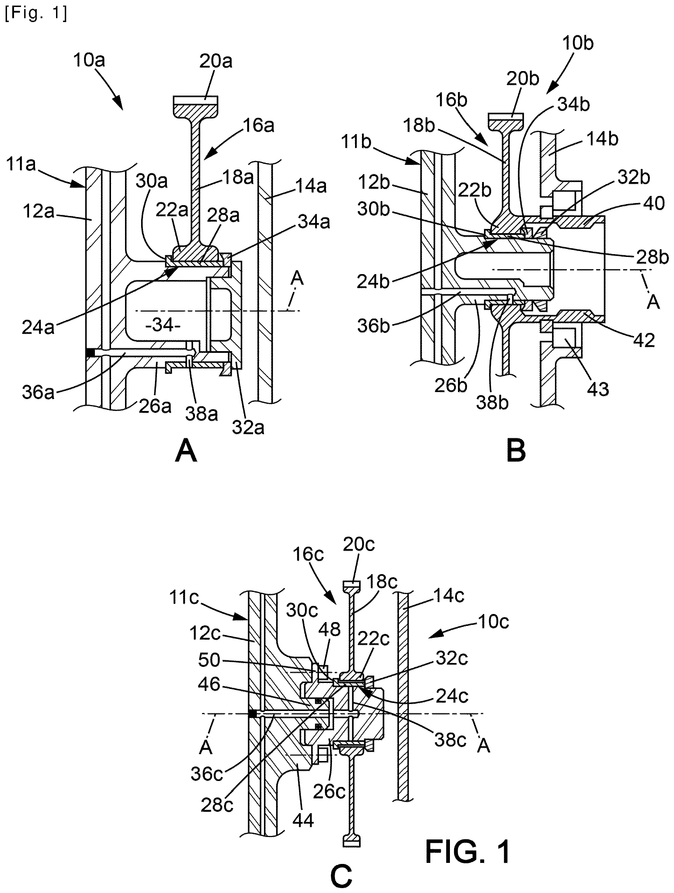

[Fig. 1] la figure 1 illustre trois réalisations selon la présente divulgation, la partie A étant nommée figure 1A, la partie B étant nommée figure 1B et la partie C étant nommée figure 1C.

### Description détaillée de l'invention

On se réfère maintenant à la figure 1 qui comprend trois parties figure 1A, figure 1B et figure 1C qui représentent, selon une vue en coupe, chacune un mode de réalisation d'un relais 10a, 10b, 10c d'accessoires selon le présent document.

Le relais d'accessoires comprend un boîtier 11a, 11b, 11c avec deux parois parallèles, à savoir une première paroi 12a, 12b, 12c et une seconde paroi 14a, 14b, 14c. Ces parois sont espacées l'une de l'autre de manière à permettre le logement de plusieurs roues d'engrenages 16a, 16b, 16c. La seconde paroi 14b peut être pourvue d'une ouverture 16 par laquelle il est possible d'accéder à la roue 16a, 16b, 16c comme cela est notamment le cas du relais d'accessoires 10b de la figure 1B.

Sur les figures 1A, 1B, 1C seul est représenté une roue 16a, 16b, 16c d'engrenages mais on comprend qu'il y a plusieurs roues d'engrenages en prise les unes avec les autres de manière à fournir une prise de puissance à une vitesse de rotation adaptée à un équipement/accessoire. Chaque roue 16a, 16b, 16c comprend un voile annulaire 18a, 18b, 18c portant extérieurement une denture périphérique 20a, 20b, 20c externe destinée à venir en prise avec une denture périphérique d'une autre roue. Chaque roue 16a, 16b, 16c comprend un fut 22a, 22b, 22c ayant la forme d'une partie annulaire comportant une surface interne cylindrique en vis-à-vis radial d'une surface cylindrique externe d'un palier hydrodynamique 24a, 24b, 24c du boitier. Le voile annulaire 18a, 18b, 18c présente la forme d'une paroi annulaire radiale qui est donc sensiblement perpendiculaire à l'axe A de rotation de la roue.

Le boîtier 11a, 11b, 11c comprend une portion en saillie 26a, 26b, 26c relativement à la première paroi 12a, 12b, 12c du boîtier 11a, 11b, 11c comme cela est le cas sur les trois modes de réalisation de la figure 1.

Plus particulièrement, sur la figure 1A et également sur la figure 1B, la portion en saillie 26a, 26b, 26c est formée d'un seul tenant avec la première paroi 12a, 12b 12c. On comprend que la portion annulaire 26c pourrait être rapportée sur la première paroi 12c comme cela est le cas sur la figure 1C. La portion en saillie 26a, 26b, 26c est ici une portion annulaire ou portion tubulaire montée à l'intérieur du fut 18a, 18b, 18c de la roue 16a, 16b, 16c.

Selon la présente divulgation, la roue 16a, 16b, 16c est guidée en rotation dans un seul et unique palier hydrodynamique 24a, 24b, 24c, ce palier comprenant une bague 28a, 28b, 28c intercalée entre la portion 26a, 26b, 26c en saillie, plus spécifiquement la portion tubulaire. Cette bague 28a, 28b, 28c comprend un rebord annulaire 30a, 30b, 30c formé à une première extrémité agencée en vis-à-vis de la première paroi 12a, 12b, 12c du boîtier 11a, 11b, 11c et un écrou 32a, 32b, 32c de blocage est monté à une seconde extrémité opposée pour bloquer axialement la bague 28a, 28b, 28c sur la portion tubulaire 26a, 26b, 26c. On remarque qu'une cale annulaire 34a, 34b est intercalée axialement entre la seconde extrémité de la bague 28a, 28b et l'écrou 32a, 32b dans le cas des réalisations des figures 1A et 1B. Cette cale annulaire 28a, 28b forme avec le rebord annulaire 30a, 30b des moyens de blocage ou de retenue axial de la roue 16a, 16b autour de la bague 28a, 28b, 28c du palier hydrodynamique 24a, 24b, 24c. Le palier hydrodynamique 24a, 24b, 24c comprend également des moyens d'alimentation en huile de l'espace annulaire formé entre la bague 28a, 28b, 28c et le fut 30a, 30b, 30c de la roue 16a, 16b, 16c.

Dans le cas de la figure 1A, ces moyens d'alimentation en huile comprennent une cavité annulaire 34 formée à l'intérieur de la portion tubulaire 26a et délimitée à une extrémité par une paroi de fond de la portion tubulaire 26a et à l'autre extrémité par l'écrou 32a de serrage vissé sur une surface interne de la portion tubulaire 26a. L'écrou 32a forme dans cette réalisation un bouchon d'obturation de la cavité 34 interne dans laquelle est stockée l'huile. Cette cavité 34 est alimentée en huile par un conduit axial 36a traversant la première paroi 12a, Ce conduit axial 36a débouche à une extrémité dans un conduit radial 38a débouchant pour une extrémité interne dans la cavité 34 et pour une extrémité externe dans l'espace annulaire entre le fut 22a et la bague 28a. Ce conduit radial 38a est formé de manière à permettre un écoulement d'huile de la cavité 34 vers l'espace annulaire en cas de coupure de l'alimentation en huile.

Dans la seconde réalisation illustrée à la figure 1B, les moyens d'alimentation en huile ne comprennent pas de cavité de stockage d'huile mais comprennent un conduit axial 36b et un conduit radial 38b formés de manière similaire à ce qui a été décrit en référence à la figure 1A. Le fut 22b est relié à une paroi cylindrique coaxiale 40 à l'axe de rotation A de la roue 16b, cette portion cylindrique 40 traversant la seconde paroi 14b du boîtier 10b et comportant des moyens de couplage 42 en rotation avec un arbre d'un accessoire. Dans cette configuration, la roue dentée 16b est prévue pour entrainer un équipement alors que ce n'est pas le cas dans la réalisation de la figure 1A bien que cela pourrait être possible si l'on y ajoutait une ouverture pour le passage d'une paroi cylindrique.

La paroi cylindrique 40 est engagée à étanchéité dans un joint annulaire 43. Dans cette seconde réalisation, l'écrou 32b n'assure pas de fonction d'étanchéité d'une cavité de stockage d'huile comme dans la réalisation de la figure 1A.

On se réfère maintenant à la figure1C dans laquelle la portion 26c en saillie est également tubulaire mais est rapportée sur un bossage 44 de la première paroi 12c, ce bossage 44 étant formé sur une face interne de la première paroi 12c. Cette portion tubulaire 26c est engagée autour d'un embout 46 du bossage 44 et est fixée en rotation sur celui-ci par des vis 48 serrées sur un rebord annulaire 50 externe de la portion tubulaire 26c et sur la périphérie du bossage 44. Le conduit axial 36c d'alimentation en huile traverse l'embout 46 et communique avec un conduit radial 38c débouchant dans l'espace annulaire précité de manière similaire à ce qui a été décrit en référence aux figures 1A et 1B. Dans cette réalisation, on observe que l'écrou 32c forme une butée axiale pour le fut 22c et qu'il n'y a pas de cale annulaire bien qu'une telle cale pourrait être présente.

Bien que la présence d'une cavité de stockage d'huile n'a pas été représentée dans les réalisations des figures 1B et 1C, on comprend que ces modes de réalisation pourraient en comprendre une, celle-ci communiquant alors avec l'espace annulaire servant à la formation du film d'huile.

## Revendications

1. Relais d'accessoires (10a, 10b, 10c) apte à entrainer des équipements d'un moteur à turbine à gaz, tel qu'un moteur d'aéronef, comprenant un boîtier (11a, 11b, 11c) et une pluralité de roues (16a, 16b, 16c) d'engrenages agencées à l'intérieur du boîtier, chaque roue (16a, 16b, 16c) comprenant un voile annulaire (18a, 18b, 18c) portant extérieurement une denture périphérique externe (20a, 20b, 20c), dans lequel au moins l'une des roues (16a, 16b, 16c) est guidée en rotation par au moins un palier hydrodynamique (24a, 24b, 24c) du boîtier (11a, 11b, 11c), **caractérisé en ce que** le boitier (11a, 11b, 11c) comprend une portion en saillie (26a, 26b, 26c) solidaire d'une première paroi (12a, 12b, 12c) du boîtier (11a, 11b, 11c), cette portion (26a, 26b, 26c) en saillie étant entourée par une bague (28a, 28b, 28c) du palier hydrodynamique (24a, 24b, 24c) laquelle est entourée par un fût (22a, 22b, 22c) de la roue formé au niveau de l'extrémité radialement interne du voile annulaire (18a, 18b, 18c) de ladite roue.

2. Relais selon la revendication 1, dans lequel ladite au moins une roue (16a, 16b, 16c) est guidée en rotation par un seul palier hydrodynamique (24a, 24b, 24c).

3. Relais selon la revendication 1 ou 2, dans lequel ledit palier hydrodynamique (24a, 24b, 24c) est formé de manière à ce qu'un plan perpendiculaire à l'axe (A) de rotation de ladite roue (16a, 16b, 16c) intercepte ledit palier hydrodynamique (24a, 24b, 24c) et la denture externe 20a, 20b, 20c) de ladite roue (16a, 16b, 16c).

4. Relais selon la revendication 3, dans lequel le voile annulaire (18a, 18b, 18c) est sensiblement perpendiculaire à l'axe (A) de rotation de ladite roue (16a, 16b, 16c).

5. Relais selon l'une des revendications 1 à 4, dans lequel ladite portion en saillie (26a, 26b, 26c) est une portion tubulaire qui est formée d'un seul tenant avec ladite première paroi (12a, 12b, 12c) du boîtier ou bien rapportée sur ladite première paroi du boîtier.

6. Relais selon la revendication 4 ou 5, dans lequel le palier hydrodynamique (24a, 24b, 24c) comprend des moyens d'alimentation en huile comportant un ou plusieurs conduits (36a, 36b, 36c) débouchant radialement dans un espace annulaire formé radialement entre la bague (28a, 28b, 28c) et une surface cylindrique interne du fût (22a, 22b, 22c) de ladite roue (16a, 16b, 16c) pour la formation d'un film d'huile dans ledit espace annulaire.

7. Relais selon les revendications 5 et 6, dans lequel ladite portion tubulaire (26a, 26b, 26c) délimite intérieurement une cavité (34) de stockage d'huile communiquant avec ledit espace annulaire.

8. Relais selon l'une des revendications précédentes, dans lequel le fût (22a, 22b, 22c) comprend une paroi cylindrique (40) coaxiale à l'axe (A) de rotation de la roue, cette paroi cylindrique (40) traversant une seconde paroi (14b) du boîtier (11b) agencée en vis-à-vis de ladite première paroi (12b) selon l'axe (A) de rotation de ladite roue (16b) et comportant des moyens de couplage (42) en rotation avec un arbre d'un accessoire.

9. Relais selon l'une des revendications précédentes, dans lequel la bague 28a, 28b, 28c) du palier hydrodynamique est bloquée axialement par un écrou (32a, 32b, 32c) vissé sur ladite portion en saillie (26a, 26b, 26c).

10. Relais selon l'une des revendications précédentes, dans lequel ladite portion en saillie (26a, 26b, 26c) est fixée sur un bossage (44) de la première paroi (12c) du boîtier (11c).

11. Turbomachine équipée d'un relais d'accessoires (10a, 10b, 10c) selon l'une des revendications précédentes.

## Patentansprüche

1. Hilfsgeräteantrieb (10a, 10b, 10c), der zum Antreiben von Einrichtungen eines Gasturbinentriebwerks, wie etwa eines Flugzeugtriebwerks, geeignet ist, enthaltend ein Gehäuse (11a, 11b, 11c) und eine Vielzahl von Getrieberädern (16a, 16b, 16c), die innerhalb des Gehäuses angeordnet sind, wobei jedes Rad (16a, 16b, 16c) einen ringförmigen Steg (18a, 18b, 18c) umfasst, der außen eine äußere Umfangsverzahnung (20a, 20b, 20c) trägt, wobei zumindest eines der Räder (16a, 16b, 16c) über zumindest ein hydrodynamisches Lager (24a, 24b, 24c) des Gehäuses (11a, 11b, 11c) drehbar geführt ist,
**dadurch gekennzeichnet, dass** das Gehäuse (11a, 11b, 11c) einen vorspringenden Abschnitt (26a, 26b, 26c) umfasst, der fest mit einer ersten Wand (12a, 12b, 12c) des Gehäuses (11a, 11b, 11c) verbunden ist, wobei dieser vorspringende Abschnitt (26a, 26b, 26c) von einem Ring (28a, 28b, 28c) des hydrodynamischen Lagers (24a, 24b, 24c) umgeben ist, welcher von einem Schaft (22a, 22b, 22c) des Rades umgeben ist, der an dem radial inneren Ende des ringförmigen Stegs (18a, 18b, 18c) des Rades ausgebildet ist.

2. Antrieb nach Anspruch 1,
wobei das zumindest eine Rad (16a, 16b, 16c) über ein einziges hydrodynamisches Lager (24a, 24b, 24c) drehbar geführt ist.

3. Antrieb nach Anspruch 1 oder 2,
wobei das hydrodynamische Lager (24a, 24b, 24c) so ausgebildet ist, dass eine Ebene senkrecht zur Drehachse (A) des Rades (16a, 16b, 16c) das hydrodynamische Lager (24a, 24b, 24c) und die äußere Verzahnung (04a, 20b, 20c) des Rades (16a, 16b, 16c) schneidet.

4. Antrieb nach Anspruch 3,
wobei der ringförmige Steg (18a, 18b, 18c) im Wesentlichen senkrecht zur Drehachse (A) des Rades (16a, 16b, 16c) verläuft.

5. Antrieb nach einem der Ansprüche 1 bis 4,
wobei der vorspringende Abschnitt (26a, 26b, 26c) ein rohrförmiger Abschnitt ist, der einstückig mit der ersten Gehäusewand (12a, 12b, 12c) ausgebildet ist oder an die erste Gehäusewand angesetzt ist.

6. Antrieb nach Anspruch 4 oder 5,
wobei das hydrodynamische Lager (24a, 24b, 24c) Ölzufuhrmittel mit einer oder mehreren Leitungen (36a, 36b, 36c) umfasst, die radial in einen ringförmigen Raum münden, der radial zwischen dem Ring (28a, 28b, 28c) und einer zylindrischen Innenfläche des Schafts (18a, 18b, 18c) des Rads (16a, 16b, 16c) ausgebildet ist, um einen Ölfilm in dem ringförmigen Raum zu bilden.

7. Antrieb nach Anspruch 5 und 6,
wobei der rohrförmige Abschnitt (26a, 26b, 26c) innen einen Ölspeicherraum (34) begrenzt, der mit dem ringförmigen Raum in Verbindung steht.

8. Antrieb nach einem der vorhergehenden Ansprüche,
wobei der Schaft (18a, 18b, 18c) eine zylindrische Wand (40) umfasst, die koaxial zur Drehachse (A) des Rads verläuft, wobei diese zylindrische Wand (40) eine zweite Wand (14b) des Gehäuses (11b) durchquert, die entlang der Drehachse (A) des Rads (16b) der ersten Wand (12b) gegenüberliegend angeordnet ist und Mittel (42) zur Drehkopplung mit einer Welle eines Zubehörteils umfasst.

9. Antrieb nach einem der vorhergehenden Ansprüche,
wobei der Ring (28a, 28b, 28c) des hydrodynamischen Lagers axial durch eine Mutter (32a, 32b, 32c) gesichert ist, die auf den vorspringenden Abschnitt (26a, 26b, 26c) aufgeschraubt ist.

10. Antrieb nach einem der vorhergehenden Ansprüche,
wobei der vorspringende Abschnitt (26a, 26b, 26c) an einer Erhebung (44) der ersten Wand (12c) des Gehäuses (11c) befestigt ist.

11. Turbotriebwerk mit einem Hilfsgeräteantrieb (10a, 10b, 10c) nach einem der vorhergehenden Ansprüche.

## Claims

1. An accessory relay (10a, 10b, 10c) capable of driving equipment of a gas turbine engine, such as an aircraft engine, comprising a case (11a, 11b, 11c) and a plurality of wheels (16a, 16b, 16c) of gears arranged inside the case, each wheel (16a, 16b, 16c) comprising an annular web (18a, 18b, 18c) externally carrying an outer peripheral gearing (20a, 20b, 20c), wherein at least one of the wheels (16a, 16b, 16c) is guided in rotation by at least one hydrodynamic bearing (24a, 24b, 24c) of the case (11a, 11b, 11c), **characterised in that** the case (11a, 11b, 11c) comprises a projecting portion (26a, 26b, 26c) secured to a first wall (12a, 12b, 12c) of the case (11a, 11b, 11c), this projecting portion (26a, 26b, 26c) being surrounded by a ring (28a, 28b, 28c) of the hydrodynamic bearing (24a, 24b, 24c) which is surrounded by a barrel (22a, 22b, 22c) of the wheel formed at the radially inner end of the annular web (18a, 18b, 18c) of said wheel.

2. The relay according to claim 1, wherein said at least one wheel (16a, 16b, 16c) is guided in rotation by one single hydrodynamic bearing (24a, 24b, 24c).

3. The relay according to claim 1 or 2, wherein said hydrodynamic bearing (24a, 24b, 24c) is formed so that a plane perpendicular to the axis (A) of rotation of said wheel (16a, 16b, 16c) intercepts said hydrodynamic bearing (24a, 24b, 24c) and the outer gearing (20a, 20b, 20c) of said wheel (16a, 16b, 16c).

4. The relay according to claim 3, wherein the annular web (18a, 18b, 18c) is substantially perpendicular to the axis (A) of rotation of said wheel (16a, 16b, 16c).

5. The relay according to one of claims 1 to 4, wherein said projecting portion (26a, 26b, 26c) is a tubular portion which is formed integrally in one-piece with said first wall (12a, 12b, 12c) of the case or affixed on said first wall of the case.

6. The relay according to claim 4 or 5, wherein the hydrodynamic bearing (24a, 24b, 24c) comprises oil supply means including one or more duct(s) (36a, 36b, 36c) opening radially into an annular space formed radially between the ring (28a, 28b, 28c) and an inner cylindrical surface of the barrel (22a, 22b, 22c) of said wheel (16a, 16b, 16c) for the formation of an oil film in said annular space.

7. The relay according to claims 5 and 6, wherein said tubular portion (26a, 26b, 26c) internally delimits an oil storage cavity (34) communicating with said annular space.

8. The relay according to one of the preceding claims, wherein the barrel (22a, 22b, 22c) comprises a cylindrical wall (40) coaxial with the axis (A) of rotation of the wheel, this cylindrical wall (40) passing through a second wall (14b) of the case (11b) arranged opposite said first wall (12b) according to the axis (A) of rotation of said wheel (16b) and including means (42) for coupling in rotation with a shaft of an accessory.

9. The relay according to one of the preceding claims, wherein the ring (28a, 28b, 28c) of the hydrodynamic bearing is blocked axially by a nut (32a, 32b, 32c) screwed onto said projecting portion (26a, 26b, 26c).

10. The relay according to one of the preceding claims, wherein said projecting portion (26a, 26b, 26c) is fastened on a boss (44) of the first wall (12c) of the case (11c).

11. A turbine engine equipped with an accessory relay (10a, 10b, 10c) according to one of the preceding claims.
